# EUROPEAN PATENT APPLICATION

(11) **EP 4 606 662 A1**
(43) Date of publication of application: **27.08.2025**
(21) Application number: 23884301.5
(22) Date of filing: 18.07.2023
(51) Int. Cl.: B60T 13/74

(54) **BRAKE CONTROL METHOD FOR AUTONOMOUS OPERATING DEVICE, AUTONOMOUS OPERATING DEVICE, AND STORAGE MEDIUM**

(30) Priority: 03.11.2022 CN 202211369627
(71) Applicant: Zhejiang Sunseeker Industrial Co., Ltd., Jinhua, Zhejiang 321042 (CN)
(72) Inventor: WANG, Zhicheng, Jinhua, Zhejiang 321042 (CN); ZHOU, Chang, Jinhua, Zhejiang 321042 (CN)
(74) Representative: Manna, Sara
(86) International application number: PCT/CN2023/107907
(87) International publication number: WO 2024/093362

(57) **Abstract**

The embodiments of the present disclosure provide a brake control method for an autonomous operation device and the autonomous operation device, relating to the technical field of autonomous operation devices. The brake control method for the autonomous operation device includes: detecting that braking of the autonomous operation device is triggered; determining an event type for triggering the braking of the autonomous operation device; if the event type is a first event type, controlling the autonomous operation device to execute a first braking strategy; and if the event type is a second event type, controlling the autonomous operation device to execute a second braking strategy; wherein the two different braking strategies apply different braking forces to the autonomous operation device. According to the present disclosure, by means of the event type for triggering the braking of the autonomous operation device and the relationship between the walking speed of the autonomous device and a preset speed threshold, the autonomous operation device is controlled to execute different braking strategies, such that a low speed can be maintained during brake control to avoid instantaneous forward tilting, and a shorter movement distance is kept between the brake triggering and complete stop.

## Description

### TECHNICAL FIELD

The present disclosure relates to the technical field of autonomous operation devices, and in particular, to a brake control method for an autonomous operation device, the autonomous operation device, and a storage medium.

### BACKGROUND

A variety of autonomous operation devices are commercially available today, such as robotic mower, robot vacuum cleaner, mopping robot, and the like. Taking a robotic mower as an example, in a case that parking brake is needed, sudden braking of the robotic mower walking at a high speed may lead to instantaneous forward tilting due to the influence of motion inertia, posing great potential safety hazards to the operation of the robotic mower. When the robotic mower enters a return state and is subjected to parking brake for wireless charging, sudden braking may induce instantaneous forward tilting of the robotic mower, and subsequent collision force could result in a rebound, thus reducing the wireless charging efficiency.

The core technical challenge in the aspect of braking control of the autonomous operation device lies in how to avoid instantaneous forward tilting when braking control is performed for the autonomous operation device and how to ensure a small gap between the wireless receiving end and the wireless charging transmitting end, during wireless charging, to obtain a high wireless charging efficiency after considering the above factors. Based on the aforementioned technical problems, the applicant proposes the technical solutions of the present disclosure.

### SUMMARY

The objective of the present disclosure is to provide a brake control method for an autonomous operation device and the autonomous operation device. By means of two different event types for triggering the braking of the autonomous operation device, the autonomous operation device is controlled to execute a first braking strategy or a second braking strategy. Different braking strategies apply different braking forces to the autonomous operation device. When the autonomous operation device is in a return state, the autonomous operation device is controlled to execute the first braking strategy, and the autonomous operation device is controlled to execute the first braking strategy or the second strategy by further determining the relationship between the walking speed of the autonomous device and a preset speed threshold, so as to avoid instantaneous forward tilting during braking control, keep a shorter movement distance between brake triggering and complete stop, and ensure a small gap between the wireless receiving end and the wireless charging transmitting end under the return state, during wireless charging, to obtain a high wireless charging efficiency.

To achieve the aforementioned objective, the present disclosure provides a brake control method for an autonomous operation device. The method includes: detecting that braking of the autonomous operation device is triggered; determining an event type for triggering the braking of the autonomous operation device as a first event type or a second event type; if the event type for triggering the braking of the autonomous operation device is the first event type, controlling the autonomous operation device to execute a first braking strategy; and if the event type for triggering the braking of the autonomous operation device is the second event type, controlling the autonomous operation device to execute a second braking strategy; wherein the first braking strategy and the second braking strategy apply different braking forces to the autonomous operation device.

In one embodiment, the method further includes: when the autonomous operation device is in a return state, if the braking of the autonomous operation device is detected to be triggered, cutting off an operation power source of the autonomous operation device, and controlling the autonomous operation device to execute the first braking strategy; and when the autonomous operation device is not in the return state, if the braking of the autonomous operation device is detected to be triggered, cutting off the operation power source of the autonomous operation device, and proceeding to the step of determining the event type for triggering the braking of the autonomous operation device as the first event type or the second event type.

In one embodiment, after detecting that the autonomous operation device enters the return state, the method further includes: detecting whether a distance between the autonomous operation device and a docking station is less than a preset distance threshold; and when the distance between the autonomous operation device and the docking station is detected to be less than the preset distance threshold, controlling the autonomous operation device to execute the first braking strategy.

In one embodiment, before determining that the event type for the braking of the autonomous operation device is the second event type and controlling the autonomous operation device to execute the second braking strategy, or when the autonomous operation device is in the return state, the method further includes: acquiring a walking speed of the autonomous operation device, and determining whether the walking speed is less than a preset speed threshold; if the walking speed is less than the preset speed threshold, proceeding to the step of controlling the autonomous operation device to execute the first braking strategy; and if the walking speed is greater than or equal to the preset speed threshold, proceeding to the step of controlling the autonomous operation device to execute the second braking strategy.

In one embodiment, when the walking speed is determined to be greater than or equal to the preset speed threshold, timing is started, and whether the walking speed is less than the preset speed threshold is detected during the period before the timing reaches a preset duration; if the walking speed is detected to be less than the preset speed threshold during the period before the timing reaches the preset duration, the method proceeds to the step of controlling the autonomous operation device to execute the first braking strategy; and if the walking speed is greater than or equal to the preset speed threshold when the timing reaches the preset duration, the method proceeds to the step of controlling the autonomous operation device to execute the first braking strategy.

In one embodiment, the preset speed threshold is less than 0.06 m/s.

In one embodiment, the preset speed threshold is greater than 0.03 m/s and less than 0.05 m/s.

In one embodiment, during the timing process, the autonomous operation device is controlled to execute the second braking strategy.

In one embodiment, the braking force is applied to the autonomous operation device under the first braking strategy to generate a first deceleration for the autonomous operation device, the braking force is applied to the autonomous operation device under the second braking strategy to generate a second deceleration for the autonomous operation device, and an absolute value of the first deceleration is greater than an absolute value of the second deceleration.

In one embodiment, braking modes employed by the first braking strategy and the second braking strategy include one or a combination of active electronic braking, active mechanical braking, passive electronic braking, and passive friction braking. In one embodiment, the braking mode of the first braking strategy is active electronic braking, and the braking mode employed by the second braking strategy is passive friction braking.

In one embodiment, the absolute value of the first deceleration is greater than or equal to 1.7 m/s².

In one embodiment, the absolute value of the first deceleration is greater than or equal to 3 m/s².

In one embodiment, the first event type includes safety-related events, and the second event type includes non-safety-related events.

In one embodiment, the safety-related events include at least one of a collision event and a lift event.

The present disclosure further provides a brake control device for an autonomous operation device. The brake control device for the autonomous operation device is configured to execute the control method for the autonomous operation device according to the present disclosure.

The present disclosure further provides a computer-readable storage medium storing a computer program. The computer program, when executed by a processor, is caused to implement the steps of the method described above.

The present disclosure further provides an autonomous operation device. The autonomous operation device includes a control module, and the control module includes a processor and the computer-readable storage medium described above.

### BRIEF DESCRIPTION OF THE DRAWINGS

FIG. 1 is a detailed flowchart of a brake control method for an autonomous operation device according to a first embodiment of the present disclosure; and
FIG. 2 is a detailed flowchart of a brake control method for an autonomous operation device according to a second embodiment of the present disclosure.

### DETAILED DESCRIPTION

The embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification are not necessarily all refer to the same embodiment. In addition, particular features, structures, or characteristics may be combined in any manner in one or more embodiments.

As used in this specification and the appended claims, the singular forms "a" and "the" include plural references, unless otherwise specified clearly in the context. It should be noted that the term "or" is generally used as a meaning of "or/and", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

A first embodiment of the present disclosure relates to a brake control method for an autonomous operation device, which is applied to the autonomous application device. The autonomous operation device refers to a robot that can autonomously move in a preset area and perform a specific operation, typically such as an intelligent sweeper/vacuum cleaner performing a cleaning operation, or an intelligent lawn mower performing a lawn mowing operation.

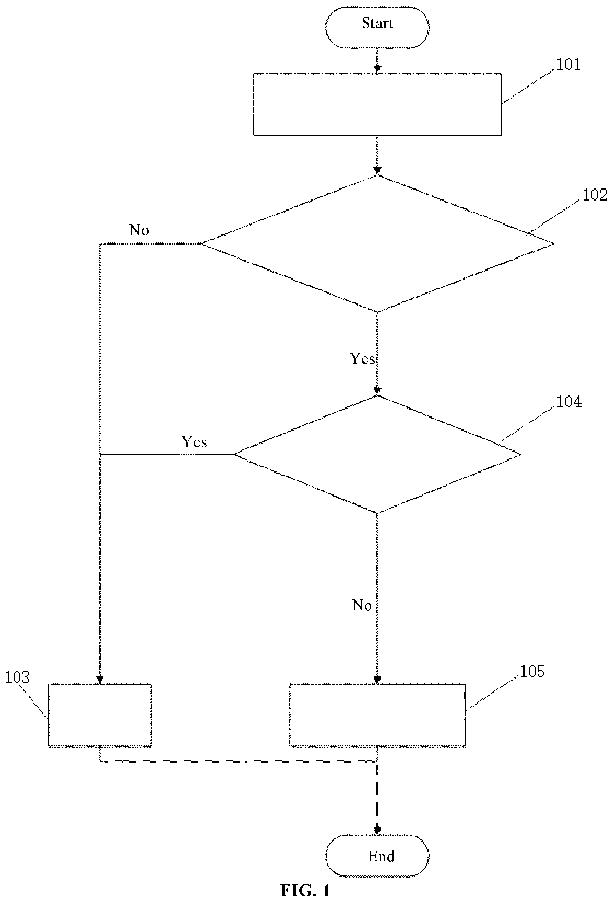

As shown in FIG. 1, provided is a detailed flowchart of the brake control method for the autonomous operation device according to the embodiment.

In step 101, when braking of the autonomous operation device is detected to be triggered, an operation power source of the autonomous operation device is cut off. In step 102, the event type for triggering the braking of the autonomous operation device is determined as a first event type or a second event type.

The first event type includes safety-related events, and the second event type includes non-safety-related events.

Specifically, the safety-related events include at least one of a collision event and a lift event. The autonomous operation device is provided with a sensing apparatus capable of sensing safety-related events such as a collision event, a lifting event, and the like; for example, in the intelligent lawn mower, the built-in collision event sensing apparatus may sense displacement changes of the floating shell of the intelligent lawn mower to trigger the collision event, and the drop-down universal wheel may sense and trigger the lift event. The braking conditions caused by the second event type include braking triggered when the autonomous operation device reaches a boundary, braking triggered by manual user shutdown, braking triggered by a turn of the autonomous operation device, and braking triggered by other non-safety-related events.

In the process of the determination of step 102, if the event type for triggering the braking of the autonomous operation device is the first event type, the method proceeds to a step 103 of controlling the autonomous operation device to execute a first braking strategy; if the event type for triggering the braking of the autonomous operation device is the second event type, a walking speed of the autonomous operation device is acquired, and whether the walking speed is less than a preset speed threshold is determined; if the walking speed is less than the preset speed threshold, the method proceeds to the step 103 of controlling the autonomous operation device to execute the first braking strategy; if the walking speed is greater than or equal to the preset speed threshold, the method proceeds to a step 105 of controlling the autonomous operation device to execute a second braking strategy.

The first braking strategy and the second braking strategy apply different braking forces to the autonomous operation device. The first braking strategy includes hard braking, and the second braking strategy includes smooth braking. Hereinafter, the first braking strategy is exemplified by hard braking, and the second braking strategy is exemplified by smooth braking.

Specifically, the preset speed threshold is obtained by a plurality of experimental tests. In the embodiment, the preset speed threshold is less than or equal to 0.06 m/s, and in some examples, the preset speed threshold is maintained between 0.03 m/s and 0.05 m/s, so as to ensure that the autonomous operation device performs hard braking at an extremely slow walking speed, thereby avoiding the forward tilting. If the walking speed is greater than or equal to the preset speed threshold, the autonomous operation device still maintains a high walking speed. In this case, the autonomous operation device is controlled to perform smooth braking until the walking speed is extremely low, namely, hard braking is applied when the walking speed is less than the preset speed threshold. Smooth braking may also be referred to as weak braking. In the embodiment, the walking speed is detected by detecting the motor speed of the autonomous operation device and combining the transmission ratio of the reduction gearbox. The detection of walking speed, as a conventional prior art, is well known to those skilled in the art and will not be described here.

The first braking strategy causes the autonomous operation device to generate a first deceleration, and the second braking strategy causes the autonomous operation device to generate a second deceleration, and an absolute value of the first deceleration is greater than an absolute value of the second deceleration. In the embodiment, the absolute value of the first deceleration is greater than or equal to 1.7 m/s², and in some examples, the absolute value of the first deceleration is greater than or equal to 3 m/s². In a specific implementation, the braking modes employed by the first braking strategy and the second braking strategy include at least one of active braking and passive braking. The selection of braking mode may be made and adjusted by those skilled in the art according to the specific characteristics of the autonomous operation device. The active braking includes active electronic braking and active mechanical braking, and the passive braking includes passive electronic braking and passive friction braking. Specifically, the active electronic braking is to apply the braking force to the motor actively according to the type and actual situation of the motor, optionally using an energy consumption braking control circuit, a reverse connection braking control circuit, a feedback braking control circuit, and the like, and the magnitude of the braking force may be adjusted through the control circuit. The active mechanical braking is to provide an operable mechanical braking mechanism, typically a brake pad operable to press the output shaft of the motor or the traveling wheel, on the autonomous operation device, and to adjust the magnitude of the braking force by controlling the pressing force of the mechanical braking mechanism. The passive electronic braking primarily involves the braking force generated by the regenerative braking of the motor. The passive friction braking primarily involves the braking force generated by the inherent frictional resistance of the structure of the autonomous operation device, typically the friction of the transmission mechanism, such as frictional resistance of the gear set in the reduction gearbox, frictional resistance between the traveling wheel and the bottom surface, and the like. In some examples, both the first braking strategy and the second braking strategy primarily employ the active electronic braking, and in practical use, the use of the reverse connection braking control circuit may be implemented by referring to the route shown in FIG. 3 of the specification in the prior patent document JP6510474B2. In some examples, the first braking strategy primarily employs the active electronic braking, and the second braking strategy primarily employs the passive friction braking. In some embodiments, the first braking strategy primarily employs the active electronic braking, and the second braking strategy primarily employs the active mechanical braking. In these embodiments, both the first braking strategy and the second braking strategy primarily employ the active mechanical braking, and the magnitude of the braking force is adjusted by controlling the pressure of the mechanical braking mechanism on the motor shaft or the traveling wheel. In some examples, the first braking strategy primarily employs the active mechanical braking, and the second braking strategy primarily employs the passive friction braking.

In the embodiment, the autonomous operation device may generate a movement distance after the braking is triggered, and the movement distance is maintained within a distance of 200 mm. In some examples, the movement distance is not greater than 80 mm, and in other examples, the movement distance is not greater than 25 mm.

A second embodiment of the present disclosure relates to a brake control method for an autonomous operation device and differs from the first embodiment in that: in the first embodiment, whether the execution of the first braking strategy or the second braking strategy is triggered is primarily determined by detecting the walking speed; in the second embodiment, whether the execution of the first braking strategy or the second braking strategy is triggered is determined by detecting the timing duration; specifically, before triggering the execution of the second braking strategy on the autonomous operation device, timing is started, whether the timing duration reaches the preset duration is detected, and whether the walking speed is less than the preset speed threshold is detected. When the timing duration does not reach the preset duration and the walking speed of the autonomous operation device is less than the preset speed threshold, the execution of the first braking strategy is triggered on the autonomous operation device. When the timing duration reaches the preset duration, the execution of the second braking strategy is triggered on the autonomous operation device.

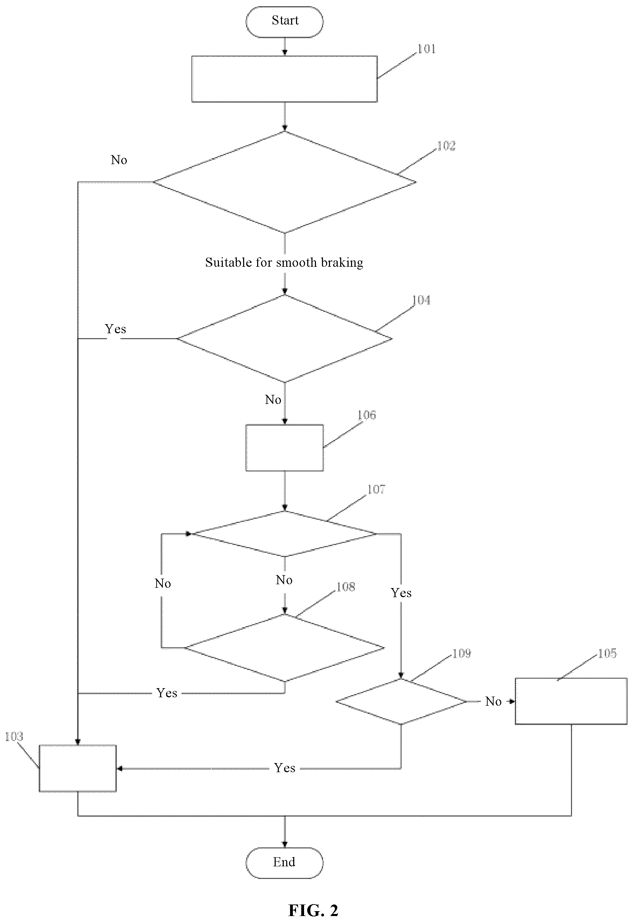

FIG. 2 is a detailed flowchart of the brake control method for the autonomous operation device according to the embodiment.

The implementation between the step 101 and the step 104 is the same as the steps in the brake control method for the autonomous operation device in the first embodiment, and thus details will not be repeated here. Before completing the step 104 and proceeding to the step 105, the embodiment includes the following steps:
In step 106, when the walking speed is determined to be greater than or equal to the preset speed threshold, timing is started, and whether the walking speed is less than the preset speed threshold is detected during the period before the timing reaches the preset duration.

In step 107, whether the timing duration reaches the preset duration is determined; if the timing duration reaches the preset duration, the method proceeds to the step 109; if the timing duration does not reach the preset duration, the method proceeds to the step 108.

In step 108, whether the walking speed of the autonomous operation device is less than the preset speed threshold is detected; if the walking speed is less than the preset speed threshold, the method proceeds to the step 103; if the walking speed is greater than or equal to the preset speed threshold, the method proceeds to the step 107 again, and continues the timing operation.

In step 109, whether the walking speed of the autonomous operation device is greater than or equal to the preset speed threshold is detected; if the walking speed is greater than or equal to the preset speed threshold, the method proceeds to the step 103; if the walking speed is less than the preset speed threshold, the method proceeds to the step 105.

Specifically, the preset speed threshold here is the same as the preset speed threshold in the first embodiment, and the preset speed threshold is less than or equal to 0.06 m/s; in some examples, the preset speed threshold is maintained between 0.03 m/s and 0.05 m/s. The preset duration is 400 ms, and the walking speed of the autonomous operation device is continuously detected during the period before the timing duration reaches the preset duration. If the walking speed is less than the preset speed threshold, the autonomous operation device is controlled to execute the first braking strategy, and if the walking speed is not less than the preset speed threshold, the timing operation is continued. When the timing reaches the preset duration, if the walking speed is not less than the preset speed threshold, the autonomous operation device is controlled to execute the second braking strategy; if the walking speed is greater than or equal to the preset speed threshold, the autonomous operation device is controlled to execute the first braking strategy. In the embodiment, the braking modes for executing the first braking strategy and executing the second braking strategy are the same as those in the first embodiment, and thus details will not be repeated here.

A third embodiment of the present disclosure relates to a brake control method for an autonomous operation device and differs from the first and second embodiments in that: when the autonomous operation device is in a return state, if the braking of the autonomous operation device is detected to be triggered, an operation power source of the autonomous operation device is cut off, and the autonomous operation device is controlled to execute the first braking strategy. When the autonomous operation device is not in the return state, the brake control method for the autonomous operation device is the same as the handling method in the first and second embodiments; if the autonomous operation device is detected to be triggered, the operation power source of the autonomous operation device is cut off, and the method proceeds to the step of determining the event type for triggering the braking of the autonomous operation device as the first event type or the second event type.

If the autonomous operation device is in the return state and the braking of the autonomous operation device is detected to be triggered, the autonomous operation device is controlled to execute the first braking strategy. When the autonomous operation device is determined to be in the return state, the method further includes: detecting whether a distance between the autonomous operation device and a docking station is less than a preset distance threshold; and when the distance between the autonomous operation device and the docking station is detected to be less than the preset distance threshold, controlling the autonomous operation device to execute the first braking strategy.

Specifically, some autonomous operation devices, when handling braking control, typically first use the reduction gearbox to reduce the motor speed after the main engine controls braking, and then wait for a period of time before braking. This approach can avoid the issue of instantaneous forward tilting, but other problems may be caused, particularly reduction of wireless charging efficiency for the machine. After the reduction gearbox is adopted to reduce the motor speed, a waiting period of time is usually set to 150 ms. During the 150 ms, the robotic mower is in a non-brake control state and continues moving a certain distance at a slightly high speed due to inertia.

When the wireless receiving end collides with the wireless charging transmitting end, the robotic mower is pushed back by the pressure of the wireless charging transmitting plate and rebounds for a certain distance. As such, the gap between the wireless receiving end and the wireless charging transmitting end increases, thereby reducing the wireless charging efficiency. Therefore, it is necessary to minimize the gap between the wireless receiving end built in the robotic mower and the wireless charging transmitting end installed at the charging station, during wireless charging of the robotic mower, through braking control, thereby obtaining higher wireless charging efficiency. When the autonomous operation device is in the return state, in order to ensure that the wireless charging receiving end in the autonomous operation device is close to the wireless charging reflecting plate placed inside the docking station to the maximum extent and thus the maximum charging efficiency is achieved during wireless charging, the gap between the wireless charging receiving end and the wireless charging reflecting plate needs to be minimized. Generally, the wireless charging efficiency is in inverse proportion to the square of the gap. In the embodiment, the return state of the autonomous operation device refers to that the autonomous operation device stops working and moves toward the docking station when the preset state is satisfied. The preset state includes situations such as low battery level of the autonomous operation device, completion of the work plan, reaching the designated work-stopping time, and the like. In some examples, when the autonomous operation device enters the return state, the first braking strategy is executed upon triggering the collision event. In some examples, when the autonomous operation device enters the return state, the travel speed remains within the preset speed threshold. In some examples, the autonomous operation device is capable of sensing whether the docking station is being approached. During the return process of the robot, the autonomous operation device is controlled to execute the first braking strategy by detecting that the distance between the autonomous operation device and the docking station is within the preset distance threshold.

A fourth embodiment of the present disclosure relates to an autonomous operation device. The autonomous operation device refers to a robot that can autonomously move in a preset area and perform a specific operation, typically such as an intelligent sweeper/vacuum cleaner performing a cleaning operation, or an intelligent lawn mower performing a lawn mowing operation. The autonomous operation device is used to perform the brake control method for the autonomous operation device according to the first embodiment, the second embodiment, or the third embodiment.

In the embodiment, the autonomous operation device at least includes a main body mechanism, a moving mechanism, a working mechanism, an energy module, a detection module, an interaction module, a control module, and the like.

The main body mechanism typically includes a chassis and a housing. The chassis is configured to install and accommodate functional mechanisms and functional modules, such as the moving mechanism, the working mechanism, the energy module, the detection module, the interaction module, and the control module. The housing is typically configured to at least partially cover the chassis, primarily for enhancing the aesthetics and recognizability of the autonomous operation device. In the embodiment, the housing is configured to translate and/or rotate relative to the chassis under an external force. Combined with a suitable detection module, exemplarily such as a Hall sensor, the housing can further serve to detect events like collisions and lifting.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. In the embodiment, the moving mechanism is a wheeled moving mechanism, which includes at least one driving wheel and at least one walking prime mover. The walking prime mover is preferably a motor, and in other embodiments, the walking prime mover may be an internal combustion engine or a machine that uses other types of energy sources to generate power. In the embodiment, the walking prime mover is preferably provided with a left driving wheel, a left walking prime mover that drives the left driving wheel, a right driving wheel, and a right walking prime mover that drives the right driving wheel. In the embodiment, the straight-line movement of the autonomous operation device is achieved by the equidirectional and constant-speed rotation of the left and right driving wheels, and the steering movement is achieved by the equidirectional and differential-speed rotation or the opposite-direction rotation of the left and right driving wheels. In other embodiments, the moving mechanism further includes a steering mechanism independent of the driving wheels and a steering prime mover independent of the walking prime mover. In the embodiment, the moving mechanism further includes at least one driven wheel, typically configured as a universal wheel. The driving wheel and the driven wheel are located at the front and rear ends of the autonomous operation device, respectively.

The working mechanism is configured to perform a specific operation task and includes a working component and a working prime mover driving the working component to operate. Exemplarily, for an intelligent sweeper/vacuum cleaner, the working component includes a roller brush, a dust suction pipe, a dust collection chamber, and the like; for an intelligent lawn mower, the working component includes a cutting blade or a cutting disc, and further includes other components for optimizing or adjusting the mowing effect, such as a height adjustment mechanism for adjusting the mowing height. The working prime mover is preferably a motor, and in other embodiments, the working prime mover may be an internal combustion engine or a machine that uses other types of energy sources to generate power. In some other embodiments, the working prime mover and the walking prime mover are configured as a same prime mover.

The energy module is configured to provide energy for various tasks of the autonomous operation device. In the embodiment, the energy module includes a battery and a charging connection structure. The battery is preferably a rechargeable battery, and the charging connection structure is preferably a charging electrode that can be exposed to the exterior of the autonomous operation device.

The detection module is configured as at least one sensor that senses an environmental parameter or a working parameter of the autonomous operation device. Typically, the detection module may include sensors related to the definition of the working area 4, for example, various types of sensors such as a magnetic induction sensor, a collision sensor, an ultrasonic sensor, an infrared sensor, a radio sensor, and the like. The types of the sensors are adapted to the position and number of corresponding signal generating devices. The detection module may further include sensors related to positioning and navigation, such as a GPS positioning apparatus, a laser positioning apparatus, an electronic compass, or a geomagnetic sensor. The detection module may further include sensors related to its own working safety, such as an obstacle sensor, a lifting sensor, a battery pack temperature sensor, and the like. The detection module may further include sensors related to the external environment, such as an ambient temperature sensor, an ambient humidity sensor, an acceleration sensor, or a light sensor.

The interaction module is configured at least to receive control instruction information inputted by a user, transmit information requiring user perception, and communicate with other systems or devices to transmit and receive information. In the embodiment, the interaction module includes an input apparatus arranged on the autonomous operation device for receiving control instruction information inputted by a user, typically such as a control panel and an emergency stop key. The interaction module further includes a display screen and/or a buzzer arranged on the autonomous operation device, enabling a user to perceive information through light and/or sound. In other embodiments, the interaction module further includes a communication module arranged on the autonomous operation device and a terminal device independent from the autonomous operation device, such as a mobile phone, a computer, or a network server. User control instruction information or other information may be inputted on the terminal device and reach the autonomous operation device via a wired or wireless communication module.

The control module typically includes at least one processor and at least one nonvolatile memory. The memory stores a pre-written computer program or an instruction set, and the processor, according to the computer program or the instruction set, controls the performance of movements, operation, or the like of the autonomous operation device. Further, the control module can also control and adjust the corresponding actions of the autonomous operation device and modify data in the memory according to a signal of the detection module and/or a user control instruction. The boundary, which may be solid, typically a wall, a fence, a railing, or the like, is used to limit the working area of the autonomous operation device. The boundary may also be virtual. Typically, a virtual boundary signal is emitted by a boundary signal - generating apparatus. The virtual boundary signal is typically, for example, an electromagnetic signal emitted by a closed conducting wire, or an optical signal and an ultrasonic signal emitted by other devices. For the autonomous operation device equipped with a positioning apparatus (such as GPS), the virtual boundary signal may also be a virtual boundary set in an electronic map exemplarily formed by two-dimensional or three-dimensional coordinates. A docking station is generally constructed on or near the boundary for the autonomous operation device to dock, particularly to supply energy to the autonomous operation device docked at the docking station.

The preferred embodiments of the present disclosure have been described in detail above. However, it should be understood that an aspect of the embodiments can be modified, if necessary, to employ aspects, features and concepts of the various patents, applications and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

## Claims

1. A brake control method for an autonomous operation device, comprising:
detecting that braking of the autonomous operation device is triggered;
determining an event type for triggering the braking of the autonomous operation device as a first event type or a second event type;
if the event type for triggering the braking of the autonomous operation device is the first event type, controlling the autonomous operation device to execute a first braking strategy; and if the event type for triggering the braking of the autonomous operation device is the second event type, controlling the autonomous operation device to execute a second braking strategy;
wherein the first braking strategy and the second braking strategy apply different braking forces to the autonomous operation device.

2. The brake control method for the autonomous operation device according to claim 1, further comprising: when the autonomous operation device is in a return state, if the braking of the autonomous operation device is detected to be triggered, controlling the autonomous operation device to execute the first braking strategy;
when the autonomous operation device is not in the return state, if the braking of the autonomous operation device is detected to be triggered, proceeding to the step of determining the event type for triggering the braking of the autonomous operation device as the first event type or the second event type.

3. The brake control method for the autonomous operation device according to claim 2, after detecting that the autonomous operation device enters the return state, further comprising:
detecting whether a distance between the autonomous operation device and a docking station is less than a preset distance threshold; and
when the distance between the autonomous operation device and the docking station is detected to be less than the preset distance threshold, controlling the autonomous operation device to execute the first braking strategy.

4. The brake control method for the autonomous operation device according to claim 1, before determining the event type for the braking of the autonomous operation device as the second event type and controlling the autonomous operation device to execute the second braking strategy, or when the autonomous operation device is in a return state, further comprising:
acquiring a walking speed of the autonomous operation device, and determining whether the walking speed is less than a preset speed threshold;
if the walking speed is less than the preset speed threshold, proceeding to the step of controlling the autonomous operation device to execute the first braking strategy; and if the walking speed is greater than or equal to the preset speed threshold, proceeding to the step of controlling the autonomous operation device to execute the second braking strategy.

5. The brake control method for the autonomous operation device according to claim 4, wherein when the walking speed is determined to be greater than or equal to the preset speed threshold, timing is started, and whether the walking speed is less than the preset speed threshold is detected during the period before the timing reaches a preset duration;
if the walking speed is detected to be less than the preset speed threshold during the period before the timing reaches the preset duration, the method proceeds to the step of controlling the autonomous operation device to execute the first braking strategy; if the walking speed is greater than or equal to the preset speed threshold when the timing reaches the preset duration, the method proceeds to the step of controlling the autonomous operation device to execute the first braking strategy.

6. The brake control method for the autonomous operation device according to claim 4, wherein the preset speed threshold is less than 0.06 m/s.

7. The brake control method for the autonomous operation device according to claim 4, wherein the preset speed threshold is greater than 0.03 m/s and less than 0.05 m/s.

8. The brake control method for the autonomous operation device according to claim 5, wherein during the timing process, the autonomous operation device is controlled to execute the second braking strategy.

9. The brake control method for the autonomous operation device according to claim 1, wherein the braking force is applied to the autonomous operation device under the first braking strategy to generate a first deceleration for the autonomous operation device, the braking force is applied to the autonomous operation device under the second braking strategy to generate a second deceleration for the autonomous operation device, and an absolute value of the first deceleration is greater than an absolute value of the second deceleration.

10. The brake control method for the autonomous operation device according to claim 1, wherein braking modes employed by the first braking strategy and the second braking strategy comprise one or a combination of active electronic braking, passive electronic braking, active mechanical braking, and passive friction braking.

11. The brake control method for the autonomous operation device according to claim 1, wherein a braking mode of the first braking strategy is active electronic braking, and a braking mode employed by the second braking strategy is passive friction braking.

12. The brake control method for the autonomous operation device according to claim 9, wherein the absolute value of the first deceleration is greater than or equal to 1.7 m/s².

13. The brake control method for the autonomous operation device according to claim 9, wherein the absolute value of the first deceleration is greater than or equal to 3 m/s².

14. The brake control method for the autonomous operation device according to claim 1, wherein
the first event type comprises safety-related events, and the second event type comprises non-safety-related events.

15. The brake control method for the autonomous operation device according to claim 14, wherein the safety-related events comprise at least one of a collision event and a lift event.

16. An autonomous operation device, configured to execute the brake control method for the autonomous operation device according to any one of claims 1 to 15.

17. A computer-readable storage medium storing a computer program, wherein the computer program, when executed by a processor, is caused to implement the steps of the method according to any one of claims 1 to 15.

18. An autonomous operation device, comprising a control module, wherein the control module comprises a processor and the computer-readable storage medium according to claim 17.
